# EUROPEAN PATENT APPLICATION

(11) **EP 3 319 276 A1**
(43) Date of publication of application: **09.05.2018**
(21) Application number: 16817225.2
(22) Date of filing: 27.06.2016
(51) Int. Cl.: H04L 12/46, H04L 29/12

(54) **METHOD AND APPARATUS FOR LEARNING MAC ADDRESS IN VIRTUAL LOCAL AREA NETWORK OF SWITCH**

(30) Priority: 30.06.2015 CN 201510374361
(71) Applicant: ZTE Corporation, Shenzhen, Guangdong 518057 (CN)
(72) Inventor: TIAN, Xiangjun, Shenzhen Guangdong 518057 (CN)
(74) Representative: Regimbeau
(86) International application number: PCT/CN2016/087311
(87) International publication number: WO 2017/000861

(57) **Abstract**

Provided are a method and apparatus for learning a MAC address in a virtual local area network of a switch. The method includes: determining whether a number of MAC addresses learned in a virtual local area network reaches a limiting condition, where the limiting condition includes one of the following: a preset threshold and a preset dynamic watershed; and when it is determined that the number of the MAC addresses learned in the virtual local area network reaches the limiting condition, stopping learning a MAC address that is received after the limiting condition is reached, and processing, in a preset manner, a packet corresponding to the MAC address that is received after the limiting condition is reached, where the preset manner includes one of the following: forwarding and dropping. This solves a problem of failing to control learning of a MAC address in a virtual local area network of a switch in the related art, and thereby achieves an effect of improving operation stability of the virtual local area network.

## Description

### TECHNICAL FIELD

The present invention relates to, but is not limited to, the field of communication technology and, in particular, relates to a method and apparatus for learning a MAC address in a virtual local area network of a switch.

### BACKGROUND

The Media Access Control (MAC) protocol is located in the data link layer of the seven-layer Open System Interconnection (OSI) protocol and is mainly responsible for controlling and connecting physical medium in the physical layer. In a traditional local area network (LAN), physical layers of various transmission media correspond to their respective MAC layers. Currently, a commonly used network adopts the MAC layer of the IEEE 802.3 standard. The essence of the MAC protocol is MAC address (i.e., physical address). MAC addresses are limited resources in each network device.

In a data network, a network device establishes Virtual Local Area Networks (VLANs) in the data network, so that communications in these VLANs do not interfere with each other. Neither of the broadcast traffic and the unicast traffic in a VLAN is forwarded to other VLANs. This helps to control traffic, reduce equipment investment, simplify network management and improve network security. In a case where MAC address flooding occurs in a certain VLAN, if this VLAN occupies all MAC address resources of the network device, not only communication in this VLAN but also the normal operations of other VLANs will be affected.

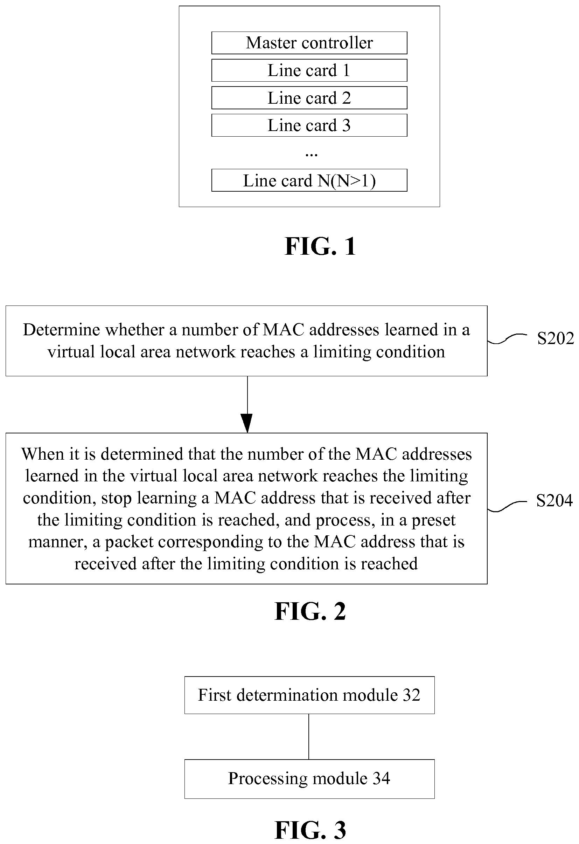

In the related art, a commonly used network device is a chassis switch. The chassis switch is a slot-type switch. Because of its good scalability, the chassis switch is widely used in communication networks. FIG. 1 is a structure diagram of a chassis switch in the related art. As illustrated in FIG. 1, the chassis switch is composed of multiple line card processors and a main control processor. The hardware (i.e., programmable logic device) cannot uniformly limit physical addresses in a certain VLAN of the chassis switch, and cannot accurately control the number of the MAC addresses in this VLAN, thus affecting normal operations of other VLANs.

No effective solution has been proposed to solve a problem of failing to control the learning of a MAC address in a virtual local area network of a switch in the related art.

### SUMMARY

The following is a summary of a subject matter described herein in detail. This summary is not intended to limit the scope of protection of the claims.

Embodiments of the present invention provide a method and apparatus for learning a MAC address in a virtual local area network of a switch, so as to solve at least the problem of failing to control the learning of a MAC address in a virtual local area network of a switch in the related art.

Embodiments of the present invention provide a method for learning a MAC address in a virtual local area network of a switch, which includes: determining whether a number of MAC addresses learned in a virtual local area network reaches a limiting condition, where the limiting condition includes one of the following: a preset threshold and a preset dynamic watershed; and when it is determined that the number of the MAC addresses learned in the virtual local area network reaches the limiting condition, stopping learning a MAC address that is received after the limiting condition is reached, and processing, in a preset manner, a packet corresponding to the MAC address that is received after the limiting condition is reached, where the preset manner includes one of the following: forwarding and dropping.

Optionally, if the limiting condition is the preset dynamic watershed, the determining whether the number of the MAC addresses learned in the virtual local area network reaches the limiting condition includes: calculating a sum of numbers of MAC addresses learned in all virtual local area networks of a switch to obtain a first total number of MAC addresses; and determining whether the first total number of MAC addresses reaches the first preset dynamic watershed, where the first preset dynamic watershed is a product of a second total number of MAC addresses and a first preset dynamic watershed percentage, and the second total number of MAC addresses is a sum of numbers of MAC addresses in all the virtual local area networks, where when it is determined that the first total number of MAC addresses reaches the first preset dynamic watershed, it is determined that the number of the MAC addresses learned in the virtual local area network reaches the limiting condition.

Optionally, the determining whether the number of the MAC addresses learned in the virtual local area network reaches the limiting condition further includes: when it is determined that the first total number of MAC addresses does not reach the first preset dynamic watershed, determining whether the first total number of MAC addresses reaches a second preset dynamic watershed, where the second preset dynamic watershed is a product of the second total number of MAC addresses and a second preset dynamic watershed percentage, and the second preset dynamic watershed is less than the first preset dynamic watershed, where when it is determined that the first total number of MAC addresses reaches the second preset dynamic watershed, it is determined that the number of the MAC addresses learned in the virtual local area network reaches the limiting condition.

Optionally, when it is determined that the first total number of MAC addresses reaches the first preset dynamic watershed, the method further includes: obtaining a number of MAC addresses in each of all the virtual local area networks; determining whether a number of MAC addresses in a first target virtual local area network among all the virtual local area networks is greater than or equal to the first preset dynamic watershed; when it is determined that the number of the MAC addresses in the first target virtual local area network among all the virtual local area networks is greater than or equal to the first preset dynamic watershed, setting a limiting value of the number of the MAC addresses in the first target virtual local area network to a number of MAC addresses learned in the first target virtual local area network, and removing a MAC address that is learned in the first target virtual local area network but not used within a preset time period; when it is determined that the number of the MAC addresses in the first target virtual local area network among all the virtual local area networks is less than the first preset dynamic watershed, determining whether the number of the MAC addresses in the first target virtual local area network is greater than or equal to an average number of MAC addresses, where the average MAC address is a quotient produced by a division of the second total MAC address by a number of all the virtual local area networks; when it is determined that the number of the MAC addresses in the first target virtual local area network is greater than or equal to the average number of MAC addresses, setting the limiting value of the number of the MAC addresses in the first target virtual local area network to a second preset dynamic watershed, and removing the MAC address that is learned in the first target virtual local area network but not used within the preset time period, where the second preset dynamic watershed is a product of the second total number of MAC addresses and a second preset dynamic watershed percentage, and the second preset dynamic watershed is less than the first preset dynamic watershed; and when it is determined that the number of the MAC addresses in the first target virtual local area network is less than the average number of MAC addresses, setting the limiting value of the number of the MAC addresses in the first target virtual local area network to the average number of MAC addresses.

Optionally, when it is determined that the first total number of MAC addresses reaches the second preset dynamic watershed, the method further includes: obtaining a number of MAC addresses in each of all the virtual local area networks; determining whether a number of MAC addresses in a second target virtual local area network among all the virtual local area networks is greater than or equal to an average number of MAC addresses, where the average number of MAC addresses is a quotient of the second total number of MAC addresses and a number of all the virtual local area networks; when it is determined that the number of the MAC addresses in the second target virtual local area network is greater than or equal to the average number of MAC addresses, setting a limiting value of the number of the MAC addresses in the second target virtual local area network to the first preset dynamic watershed; and when it is determined that the number of the MAC addresses in the second target virtual local area network is less than the average number of MAC addresses, setting the limiting value of the number of the MAC addresses in the second target virtual local area network to the second total number of MAC addresses.

Optionally, after the setting the limiting value of the number of the MAC addresses in the second target virtual local area network to the first preset dynamic watershed, the method further includes: determining a priority range for the second target virtual local area network, where the priority range is used for indicating whether to continue learning a MAC address in the second target virtual local area network.

Embodiments of the present invention provide an apparatus for learning a MAC address in a virtual local area network of a switch. The apparatus includes: a first determination module and a processing module; the first determination module is configured to determine whether a number of MAC addresses learned in a virtual local area network reaches a limiting condition, the processing module is configured to, when it is determined that the number of the MAC addresses learned in the virtual local area network reaches the limiting condition, stop learning a MAC address that is received after the limiting condition is reached, and process, in a preset manner, a packet corresponding to the MAC address that is received after the limiting condition is reached, where the limiting condition includes one of the following: a preset threshold and a preset dynamic watershed, and the preset manner includes one of the following: forwarding and dropping.

Optionally, if the limiting condition is the preset dynamic watershed, the first determination module includes a counting unit and a first determination unit, the counting unit is configured to calculate a sum of numbers of MAC addresses learned in all virtual local area networks of a switch to obtain a first total number of MAC addresses, the first determination unit is configured to determine whether the first total number of MAC addresses reaches the first preset dynamic watershed, where the first preset dynamic watershed is a product of a second total number of MAC addresses and a first preset dynamic watershed percentage, and the second total number of MAC addresses is a sum of numbers of MAC addresses in all the virtual local area networks, where when it is determined that the first total number of MAC addresses reaches the first preset dynamic watershed, it is determined that the number of the MAC addresses learned in the virtual local area network reaches the limiting condition.

Optionally, the first determination module further includes: a second determination unit configured to, when it is determined that the first total number of MAC addresses does not reach the first preset dynamic watershed, determine whether the first total number of MAC addresses reaches a second preset dynamic watershed, where the second preset dynamic watershed is a product of the second total number of MAC addresses and a second preset dynamic watershed percentage, and the second preset dynamic watershed is less than the first preset dynamic watershed, where when it is determined that the first total number of MAC addresses reaches the second preset dynamic watershed, it is determined that the number of the MAC addresses learned in the virtual local area network reaches the limiting condition.

Optionally, the apparatus further includes: a first obtaining module, a second determination module, a first setting module, a third determination module, a second setting module and a third setting module; the first obtaining module is configured to, when it is determined that the first total number of MAC addresses reaches the first preset dynamic watershed, obtain a number of MAC addresses in each of all the virtual local area networks; the second determination module is configured to determine whether a number of MAC addresses in a first target virtual local area network among all the virtual local area networks is greater than or equal to the first preset dynamic watershed; the first setting module is configured to, when it is determined that the number of the MAC addresses in the first target virtual local area network among all the virtual local area networks is greater than or equal to the first preset dynamic watershed, set a limiting value of the number of the MAC addresses in the first target virtual local area network to a number of MAC addresses learned in the first target virtual local area network, and remove a MAC address that is learned in the first target virtual local area network but not used within a preset time period; the third determination module is configured to, when it is determined that the number of the MAC addresses in the first target virtual local area network among all the virtual local area networks is less than the first preset dynamic watershed, determine whether the number of the MAC addresses in the first target virtual local area network is greater than or equal to an average number of MAC addresses, where the average number of MAC addresses is a quotient of the second total number of MAC addresses and a number of all the virtual local area networks; the second setting module is configured to, when it is determined that the number of the MAC addresses in the first target virtual local area network is greater than or equal to the average number of MAC addresses, set the limiting value of the number of the MAC addresses in the first target virtual local area network to a second preset dynamic watershed, and remove the MAC address that is learned in the first target virtual local area network but not used within the preset time period, where the second preset dynamic watershed is a product of the second total number of MAC addresses and a second preset dynamic watershed percentage, and the second preset dynamic watershed is less than the first preset dynamic watershed; the third setting module is configured to, when it is determined that the number of the MAC addresses in the first target virtual local area network is less than the average number of MAC addresses, set the limiting value of the number of the MAC addresses in the first target virtual local area network to the average number of MAC addresses.

Optionally, the apparatus further includes: a second obtaining module, a fourth setting module and a fifth setting module; the second obtaining module is configured to, when it is determined that the first total number of MAC addresses reaches the second preset dynamic watershed, obtain a number of MAC addresses in each of all the virtual local area networks; the fourth determination module is configured to determine whether a number of MAC addresses in a second target virtual local area network among all the virtual local area networks is greater than or equal to an average number of MAC addresses, where the average number of MAC addresses is a quotient of the second total number of MAC addresses and a number of all the virtual local area networks; the fourth setting module is configured to, when it is determined that the number of the MAC addresses in the second target virtual local area network is greater than or equal to the average number of MAC addresses, set a limiting value of the number of the MAC addresses in the second target virtual local area network to the first preset dynamic watershed; the fifth setting module is configured to, when it is determined that the number of the MAC addresses in the second target virtual local area network is less than the average number of MAC addresses, set the limiting value of the number of the MAC addresses in the second target virtual local area network to the second total number of MAC addresses.

Furthermore, the apparatus further includes: a determination module, which is configured to, after the limiting value of the number of the MAC addresses in the second target virtual local area network is set to the first preset dynamic watershed, determine a priority range for the second target virtual local area network, where the priority range is used for indicating whether to continue learning a MAC address in the second target virtual local area network.

Embodiments of the present invention further provide a computer-readable storage medium configured to store computer-executable instructions for executing the above-mentioned method when executed by a processor.

The solution provided by the present invention includes: determining whether a number of MAC addresses learned in a virtual local area network reaches a limiting condition, where the limiting condition includes one of the following: a preset threshold and a preset dynamic watershed; and when it is determined that the number of the MAC addresses learned in the virtual local area network reaches the limiting condition, stopping learning a MAC address that is received after the limiting condition is reached, and processing, in a preset manner, a packet corresponding to the MAC address that is received after the limiting condition is reached, where the preset manner includes one of the following: forwarding and dropping. This solution solves a problem of failing to control learning of a MAC address in a virtual local area network of a switch in the related art, and thereby achieves an effect of improving operation stability of the virtual local area network.

Other aspects can be understood after the accompanying drawings and detailed description are read and understood.

### BRIEF DESCRIPTION OF DRAWINGS

FIG. 1 is a structure diagram of a chassis switch in the related art.
FIG. 2 is a flowchart of a method for learning a MAC address in a virtual local area network of a switch according to an embodiment of the present invention.
FIG. 3 is a block diagram of an apparatus for learning a MAC address in a virtual local area network of a switch according to an embodiment of the present invention.
FIG. 4 is a schematic diagram of a MAC limit priority classification according to an embodiment of the present invention.
FIG. 5 is a schematic diagram of a MAC limit dynamic watershed in a virtual local area network according to an embodiment of the present invention.
FIG. 6 is a schematic diagram of the communication on a chassis switch according to an embodiment of the present invention.
FIG. 7 is a flowchart of a method (corresponding to a user configuration mode) for learning a MAC address in a virtual local area network of a switch according to a preferred embodiment of the present invention.
FIG. 8 is a flowchart of a method (corresponding to a dynamic limit configuration mode) for learning a MAC address in a virtual local area network of a switch according to a preferred embodiment of the present invention.

### DETAILED DESCRIPTION

Embodiments of the present invention will be described below in detail with reference to the accompanying drawings. If not in collision, the embodiments described herein and the features thereof may be combined with each other.

It is to be noted that the terms "first", "second" and the like in the description, claims and drawings of the present invention are used to distinguish between similar objects and are not necessarily used to describe a particular order or sequence.

Embodiments of the present invention provide a method for learning a MAC address in a virtual local area network of a switch. FIG. 2 is a flowchart of a method for learning a MAC address in a virtual local area network of a switch according to an embodiment of the present invention. As illustrated in FIG. 2, the method includes the steps described below.

In step S202, it is determined whether a number of MAC addresses learned in a virtual local area network reaches a limiting condition. The limiting condition includes one of the following: a preset threshold and a preset dynamic watershed.

In step S204, when it is determined that the number of the MAC addresses learned in the virtual local area network reaches the limiting condition, a MAC address that is received after the limiting condition is reached is no longer learned, and a packet corresponding to the MAC address that is received after the limiting condition is reached is processed in a preset manner. The preset manner includes one of the following: forwarding and dropping.

Through the above steps, the number of MAC addresses learned in a virtual local area network in a different situation is compared with a limiting condition corresponding to the virtual local area network, and when the number of the MAC addresses learned in the virtual local area network reaches the corresponding limiting condition, a MAC address that is received after the limiting condition is reached is no longer learned, and a packet corresponding to the MAC address that is received after the limiting condition is reached is dropped or forwarded, so as to avoid affecting operations of other virtual local area networks. This solves a problem of failing to control learning of a MAC address in a virtual local area network of a switch in the related art, and thereby achieves an effect of improving operation stability of the virtual local area network.

If a scale of the virtual local area network is known, the limiting condition is the preset threshold; and if the scale of the virtual local area network is unknown, the limiting condition is the preset dynamic watershed.

In the present embodiment, if the limiting condition is the preset dynamic watershed, the preset dynamic watershed includes a first preset dynamic watershed. Whether the number of the MAC addresses learned in the virtual local area network reaches the limiting condition is determined as follows: a sum of numbers of MAC addresses learned in all virtual local area networks of a switch is calculated to obtain a first total number of MAC addresses; and whether the first total number of MAC addresses reaches the first preset dynamic watershed is determined. The first preset dynamic watershed is a product of a second total number of MAC addresses and a first preset dynamic watershed percentage, and the second total number of MAC address is a sum of numbers of MAC addresses in all the virtual local area networks. When it is determined that the first total number of MAC address reaches the first preset dynamic watershed, it is determined that the number of the MAC addresses learned in the virtual local area network reaches the limiting condition. The first preset dynamic watershed percentage may be set according to requirements, e.g., may be set to 70%.

In the present embodiment, the preset dynamic watershed further includes a second preset dynamic watershed. Whether the number of the MAC addresses learned in the virtual local area network reaches the limiting condition is further determined as follows: when it is determined that the first total number of MAC addresses does not reach the first preset dynamic watershed, whether the first total number of MAC addresses reaches the second preset dynamic watershed is determined. The second preset dynamic watershed is a product of the second total number of MAC addresses and a second preset dynamic watershed percentage, and the second preset dynamic watershed is less than the first preset dynamic watershed. When it is determined that the first total number of MAC addresses reaches the second preset dynamic watershed, it is determined that the number of the MAC addresses learned in the virtual local area network reaches the limiting condition. The second preset dynamic watershed percentage may be set according to requirements but set to a value less than the first preset dynamic watershed percentage, e.g., may be set to 50%.

In the present embodiment, when it is determined that the first total number of MAC addresses reaches the first preset dynamic watershed, the method further includes the steps described below.

In step S1, a number of MAC addresses in each of all the virtual local area networks is obtained.

In step S2, it is determined whether a number of MAC addresses in a first target virtual local area network among all the virtual local area networks is greater than or equal to the first preset dynamic watershed.

In step S3, when it is determined that the number of the MAC addresses in the first target virtual local area network among all the virtual local area networks is greater than or equal to the first preset dynamic watershed, a limiting value of the number of the MAC addresses in the first target virtual local area network is set to a number of MAC addresses learned in the first target virtual local area network, and a MAC address that is learned in the first target virtual local area network but not used within a preset time period is removed. That is, after the limiting value of the number of the MAC addresses in the first target virtual local area network is set, an aging rate of the MAC address that has been learned in the first target virtual local area network is accelerated so as to make a user who has occupied a resource but does not use the resource for a long time get offline, and an aging rate of a MAC address of a malicious attack occupying a resource is accelerated.

In step S4, when it is determined that the number of the MAC addresses in the first target virtual local area network among all the virtual local area networks is less than the first preset dynamic watershed, it is determined whether the number of the MAC addresses in the first target virtual local area network is greater than or equal to an average number of MAC addresses. The average number of MAC addresses is a quotient of the second total number of MAC addresses and a number of all the virtual local area networks.

In step S5, when it is determined that the number of the MAC addresses in the first target virtual local area network is greater than or equal to the average number of MAC addresses, the limiting value of the number of the MAC addresses in the first target virtual local area network is set to a second preset dynamic watershed, and the MAC address that is learned in the first target virtual local area network but not used within the preset time period is removed. The second preset dynamic watershed is a product of the second total number of MAC addresses and a second preset dynamic watershed percentage, and the second preset dynamic watershed is less than the first preset dynamic watershed.

In step S6, when it is determined that the number of the MAC addresses in the first target virtual local area network is less than the average number of MAC addresses, the limiting value of the number of the MAC addresses in the first target virtual local area network is set to the average number of MAC addresses.

It is to be noted that, when it is determined that the first total number of MAC addresses reaches the first preset dynamic watershed, a limiting value is set for the number of the MAC addresses of each of all the virtual local area networks by performing the above steps S1 through S6. That is, each of all the virtual local area networks is sequentially regarded as the first target virtual local area network to perform the above steps S1 through S6.

In the present embodiment, when it is determined that the first total number of MAC addresses reaches the second preset dynamic watershed, the method further includes the steps described below.

In step S7, a number of MAC addresses in each of all the virtual local area networks is obtained.

In step S8, it is determined whether a number of MAC addresses in a second target virtual local area network among all the virtual local area networks is greater than or equal to an average number of MAC addresses. The average number of MAC addresses is a quotient of the second total number of MAC addresses and a number of all the virtual local area networks.

In step S9, when it is determined that the number of the MAC addresses in the second target virtual local area network among all the virtual local area networks is greater than or equal to the average number of MAC addresses, a limiting value of the number of the MAC addresses in the second target virtual local area network is set to the first preset dynamic watershed.

In step S10, when it is determined that the number of the MAC addresses in the second target virtual local area network among all the virtual local area networks is less than the average number of MAC addresses, the limiting value of the number of the MAC addresses in the second target virtual local area network is set to the second total number of MAC addresses.

It is to be noted that, when it is determined that the first total number of MAC addresses reaches the second preset dynamic watershed, a limiting value is set for the number of the MAC addresses of each of all the virtual local area networks by performing the above steps S7 through S10. That is, each of all the virtual local area networks is sequentially regarded as the second target virtual local area network to perform the above steps S7 through S10.

In the present embodiment, after the limiting value of the number of the MAC addresses in the second target virtual local area network is set to the first preset dynamic watershed, the method further includes: determining a priority range for the second target virtual local area network. The priority range is used for indicating whether to continue learning a MAC address in the second target virtual local area network. That is, if the second target virtual local area network falls within a high priority range, the second target virtual local area network may continue learning the MAC address; and if the second target virtual local area network falls within a low priority range, the second target virtual local area network stops learning the MAC address.

Embodiments of the present invention further provide an apparatus for learning a MAC address in a virtual local area network of a switch. The apparatus is used for implementing the above-mentioned embodiment and preferred implementations. What has been described will not be repeated. As used below, the term "module" may be software, hardware or a combination thereof capable of implementing preset functions. The apparatus described in the following embodiment is preferably implemented by software, but implementation by hardware or by a combination of software and hardware is also possible and conceived.

FIG. 3 is a block diagram of an apparatus for learning a MAC address in a virtual local area network of a switch according to an embodiment of the present invention. As illustrated in FIG. 3, the apparatus includes a first determination module 32 and a processing module 34.

The first determination module 32 is configured to determine whether a number of MAC addresses learned in a virtual local area network reaches a limiting condition. The limiting condition includes one of the following: a preset threshold and a preset dynamic watershed.

The processing module 34 is configured to, when it is determined that the number of the MAC addresses learned in the virtual local area network reaches the limiting condition, stop learning a MAC address that is received after the limiting condition is reached, and process, in a preset manner, a packet corresponding to the MAC address that is received after the limiting condition is reached. The preset manner includes one of the following: forwarding and dropping.

Through the above apparatus, the number of MAC addresses learned in a virtual local area network in a different situation is compared with a limiting condition corresponding to the virtual local area network, and when the number of the MAC addresses learned in the virtual local area network reaches the limiting condition to avoid affecting operations of other virtual local area networks, a MAC address that is received after the limiting condition is reached is no longer learned, and a packet corresponding to the MAC address that is received after the limiting condition is reached is dropped or forwarded. This solves a problem of failing to control learning of a MAC address in a virtual local area network of a switch in the related art, and thereby achieves an effect of improving operation stability of the virtual local area network.

If a scale of the virtual local area network is known, the limiting condition is the preset threshold; and if the scale of the virtual local area network is unknown, the limiting condition is the preset dynamic watershed.

In the present embodiment, if the limiting condition is the preset dynamic watershed, the preset dynamic watershed includes a first preset dynamic watershed. The first determination module 32 includes a counting unit and a first determination unit.

The counting unit is configured to calculate a sum of numbers of MAC addresses learned in all virtual local area networks of a switch to obtain a first total number of MAC addresses.

The first determination unit is configured to determine whether the first total number of MAC addresses reaches the first preset dynamic watershed. The first preset dynamic watershed is a product of a second total number of MAC addresses and a first preset dynamic watershed percentage, and the second total number of MAC addresses is a sum of numbers of MAC addresses in all the virtual local area networks. When it is determined that the first total number of MAC addresses reaches the first preset dynamic watershed, it is determined that the number of the MAC addresses learned in the virtual local area network reaches the limiting condition. The first preset dynamic watershed percentage may be set according to requirements, e.g., may be set to 70%.

In the present embodiment, the preset dynamic watershed further includes a second preset dynamic watershed. The first determination module 32 further includes a second determination unit.

The second determination unit is configured to, when it is determined that the first total number of MAC addresses does not reach the first preset dynamic watershed, determine whether the first total number of MAC addresses reaches a second preset dynamic watershed. The second preset dynamic watershed is a product of the second total number of MAC addresses and a second preset dynamic watershed percentage, and the second preset dynamic watershed is less than the first preset dynamic watershed. When it is determined that the first total number of MAC addresses reaches the second preset dynamic watershed, it is determined that the number of the MAC addresses learned in the virtual local area network reaches the limiting condition. The second preset dynamic watershed percentage may be set according to requirements but set to a value less than the first preset dynamic watershed percentage, e.g., may be set to 50%.

In the present embodiment, the apparatus further includes a first obtaining module, a second determination module, a first setting module, a third determination module, a second setting module and a third setting module.

The first obtaining module is configured to, when it is determined that the first total number of MAC addresses reaches the first preset dynamic watershed, obtain a number of MAC addresses in each of all the virtual local area networks.

The second determination module is configured to determine whether a number of MAC addresses in a first target virtual local area network among all the virtual local area networks is greater than or equal to the first preset dynamic watershed.

The first setting module is configured to, when it is determined that the number of the MAC addresses in the first target virtual local area network among all the virtual local area networks is greater than or equal to the first preset dynamic watershed, set a limiting value of the number of the MAC addresses in the first target virtual local area network to a number of MAC addresses learned in the first target virtual local area network, and remove a MAC address that is learned in the first target virtual local area network but not used within a preset time period. That is, after the limiting value of the number of the MAC addresses in the first target virtual local area network is set, an aging rate of the MAC address that has been learned in the first target virtual local area network is accelerated to make a user who has occupied a resource but does not use the resource for a long time get offline, and an aging rate of a MAC address of a malicious attack occupying a resource is accelerated.

The third determination module is configured to, when it is determined that the number of the MAC addresses in the first target virtual local area network among all the virtual local area networks is less than the first preset dynamic watershed, determine whether the number of the MAC addresses in the first target virtual local area network is greater than or equal to an average number of MAC addresses. The average number of MAC addresses is a quotient of the second total number of MAC addresses and a number of all the virtual local area networks.

The second setting module is configured to, when it is determined that the number of the MAC addresses in the first target virtual local area network is greater than or equal to the average number of MAC addresses, set the limiting value of the number of the MAC addresses in the first target virtual local area network to a second preset dynamic watershed, and remove the MAC address that is learned in the first target virtual local area network but not used within the preset time period. The second preset dynamic watershed is a product of the second total number of MAC addresses and a second preset dynamic watershed percentage, and the second preset dynamic watershed is less than the first preset dynamic watershed.

The third setting module is configured to, when it is determined that the number of the MAC addresses in the first target virtual local area network is less than the average number of MAC addresses, set the limiting value of the number of the MAC addresses in the first target virtual local area network to the average number of MAC addresses.

It is to be noted that, when it is determined that the first total number of MAC addresses reaches the first preset dynamic watershed, a limiting value is set for the number of the MAC addresses of each of all the virtual local area networks by invoking the first obtaining module, the second determination module, the first setting module, the third determination module, the second setting module and the third setting module described above. That is, each of all the virtual local area networks is sequentially regarded as the first target virtual local area network to invoke the first obtaining module, the second determination module, the first setting module, the third determination module, the second setting module and the third setting module described above.

In the present embodiment, the apparatus further includes a second obtaining module, a fourth determination module, a fourth setting module and a fifth setting module.

The second obtaining module is configured to, when it is determined that the first total number of MAC addresses reaches the second preset dynamic watershed, obtain a number of MAC addresses in each of all the virtual local area networks.

The fourth determination module is configured to determine whether a number of MAC addresses in a second target virtual local area network among all the virtual local area networks is greater than or equal to an average number of MAC addresses. The average number of MAC addresses is a quotient of the second total number of MAC addresses and a number of all the virtual local area networks.

The fourth setting module is configured to, when it is determined that the number of the MAC addresses in the second target virtual local area network among all the virtual local area networks is greater than or equal to the average number of MAC addresses, set a limiting value of the number of the MAC addresses in the second target virtual local area network to the first preset dynamic watershed.

The fifth setting module is configured to, when it is determined that the number of the MAC addresses in the second target virtual local area network among all the virtual local area networks is less than the average number of MAC addresses, set the limiting value of the number of the MAC addresses in the second target virtual local area network to the second total number of MAC addresses.

It is to be noted that, when it is determined that the first total number of MAC addresses reaches the first preset dynamic watershed, a limiting value is set for the number of the MAC addresses of each of all the virtual local area networks by invoking the second obtaining module, the fourth determination module, the fourth setting module and the fifth setting module described above. That is, each of all the virtual local area networks is sequentially regarded as the second target virtual local area network to invoke the second obtaining module, the fourth determination module, the fourth setting module and the fifth setting module described above.

In the present embodiment, the apparatus further includes a determination module. The confirmation module is configured to, after the limiting value of the number of the MAC addresses in the second target virtual local area network is set to the first preset dynamic watershed, determine a priority range for the second target virtual local area network. The priority range is used for indicating whether to continue learning a MAC address in the second target virtual local area network.

The present invention will be described below in detail in conjunction with preferred embodiments and implementations.

If a scale of a virtual local area network is known, a method for learning a MAC address in a virtual local area network of a switch may also be referred to as a user configuration mode. If the scale of the virtual local area network is unknown, the method for learning a MAC address in a virtual local area network of a switch may also be referred to as a dynamic limit configuration mode. That is, the method for learning a MAC address in a virtual local area network of a switch provided by the present invention is implemented in two modes depending on the user scale. If the scale is known, the user configuration mode is adopted. If the scale is unknown, the dynamic limit configuration mode is provided by a switch. After a limit is reached, the above two modes control a MAC resource in the following three modes: mode 1, mode 2 and mode 3. In mode 1, an aging rate is accelerated so that a user who has occupied a resource but does not use the resource for a long time period gets offline; and an aging rate of a MAC address of a malicious attack occupying a resource is accelerated. In mode 2, the MAC learning function of some virtual local area networks are disabled. In mode 3, different priority ranges are configured, and different learning strategies are adopted for different priorities.

However, whether the user configuration mode is adopted or the dynamic limit configuration mode is adopted, a user performs related configurations first. The following describes an example of a virtual local area network X where related configurations are listed.

Configuration 1: In the user configuration mode, a threshold of a number of MAC addresses in a virtual local area network X of a chassis switch is set to LIMITx.

Configuration 2: In the user configuration mode, after the number of the MAC addresses in the virtual local area network X of the chassis switch reaches LIMITx, whether a packet whose source MAC address exceeds LIMITx is dropped or forwarded is configured.

Configuration 3: Whether to enable dynamic limit function of all virtual local area networks is configured. If the function is enabled, then autolimit = 1. If the function is disabled, then autolimit = 0.

Configuration 4: The user configures a dynamic watershed percentage. For example, the first dynamic watershed percentage is a% and the second dynamic watershed percentage is b%. It is to be noted that the number of these dynamic watersheds is temporarily defined as two, but is not limited to two.

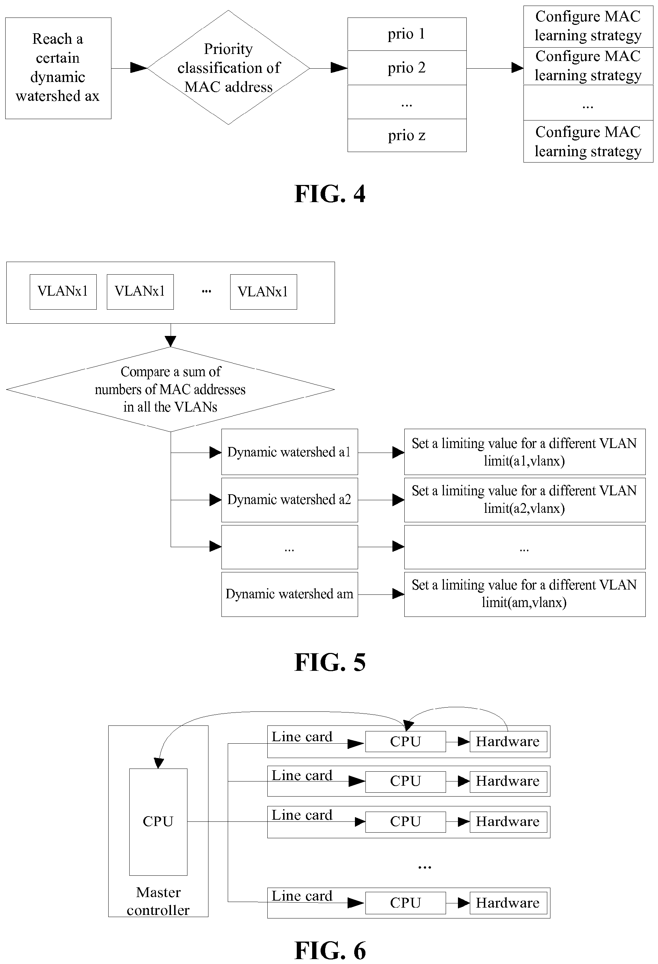

Configuration 5: a MAC learning strategy is configured for a different priority range to determine whether to allow MAC learning in the virtual local area network X in a corresponding priority range. If MAC learning is allowed, then prioXlearn = 1. If MAC learning is not allowed, then prioXlearn = 0. FIG. 4 is a schematic diagram of a MAC limit priority classification according to an embodiment of the present invention. The specific configuration of priority classification is shown in FIG. 4.

The user configuration mode adopts the configuration 1 together with the configuration 2. The dynamic limit configuration mode adopts the configuration 3, the configuration 4 and the configuration 5 together with the configuration 2.

FIG. 5 is a schematic diagram of a MAC limit dynamic watershed in a virtual local area network according to an embodiment of the present invention. As illustrated in FIG. 5, in a dynamic limit configuration mode, a sum of the quantities of MAC addresses in all virtual local area networks of a network device (e.g., switch) is calculated and is compared with several dynamic watersheds configured by a user; and when different dynamic watersheds are reached, different limiting values of MAC numbers are configured for different virtual local area networks. The dynamic limit configuration mode not only ensures that each virtual local area network has available MAC resources but also allocates more MAC resources to virtual local area networks that need more MAC resources, so that allocation of MAC resources is more appropriate.

FIG. 6 is a schematic diagram of communication of a chassis switch according to an embodiment of the present invention. A working process of a master controller and a line card in the chassis switch in a user configuration mode will be described with reference to FIG. 6.

### Master controller:

The master controller is responsible for counting a number of MAC addresses learned in each virtual local area network by all line cards. For a virtual local area network X configured with the configuration 1, when a number of MAC addresses in the virtual local area network X reaches a threshold LIMITx, the master controller is responsible for notifying all the line cards of a message 1 that indicates stopping learning a physical address in the virtual local area network X; and notifying, according to the configuration 2, all the line cards of a message that indicates dropping (if the configuration 2 is "drop") or forwarding (if the configuration 2 is "forward") a packet whose address exceeds the threshold, and removing a MAC address whose address exceeds the threshold and has been reported to the master controller.

When the number of the MAC addresses in the virtual local area network X is less than the threshold, the master controller is responsible for notifying all the line cards of a message 2 that indicates enabling learning a physical address in the virtual local area network X and not dropping packets.

### Line card:

After receiving different packets having different source MAC addresses, the hardware of all line cards reports MAC address information to the CPUs of the line cards. Then the CPUs of the line cards send messages to a CPU of the master controller. After receiving the message 1 from the master controller, all the line cards configure a programmable logic device to control the hardware not to report a MAC address exceeding the threshold, notify a driver to process (drop or directly forward) the packet whose address exceeding the threshold according to the configuration 2, and remove the MAC address exceeding the threshold of which the master controller has notified removal.

After receiving the message 2 from the master controller, all the line cards control the hardware to enable learning the MAC address in the virtual local area network.

It is to be noted that the programmable logic device has the following functions: 1. dropping a packet whose source MAC address exceeds the limit of source MAC address; 2. configuring a VLAN-based threshold of the limit of source MAC addresses.

Taking a chassis switch as an example, in the dynamic limit mode, a working process of a master controller and a line card in the chassis switch in the user configuration mode is described below. After enabling a function of dynamically limiting a number of MAC addresses in each virtual local area network, the master controller monitors in real time a total number of MAC addresses that have been learned in all the virtual local area networks, configures different MAC limiting values for different virtual local area networks by using strategies after the total number of the MAC addresses that have been learned in all the virtual local area networks reaches different watersheds, and instructs the line cards to configure hardware. In addition, for virtual local area networks that occupy a large number of MAC addresses, a method of accelerating an aging rate is adopted so that MAC addresses that are not used for a long time period can age rapidly, and MAC resources are released. According to the different priorities configured in the configuration 5, MAC learning is retained for some priorities, and MAC learning is disabled for some low priorities. In a case of below a different watershed, a limit mode below this watershed is restored. In a case of below the lowest watershed, MAC learning is no longer limited and the line cards are instructed to configure hardware.

Taking a cartridge switch as an example, the dynamic limit mode is described below. After enabling a function of dynamically limiting a number of MAC addresses in each virtual local area network, a CPU of the switch monitors in real time a total number of MAC addresses that have been learned in all the virtual local area networks, configures different MAC limiting values for different virtual local area networks by using strategies after the total number of the MAC addresses that have been learned in all the virtual local area networks reaches different watersheds. In addition, for virtual local area networks that occupy a large number of MAC addresses, a method of accelerating an aging rate is adopted so that MAC addresses that are not used for a long time period can age rapidly, and MAC resources are released. According to the different priorities configured in the configuration 5, MAC learning is retained for some priorities, and MAC learning is disabled for some low priorities. In a case of below a different watershed, a limit mode below the watershed is restored. In a case of below the lowest watershed, MAC learning is no longer limited and the line cards are instructed to configure hardware.

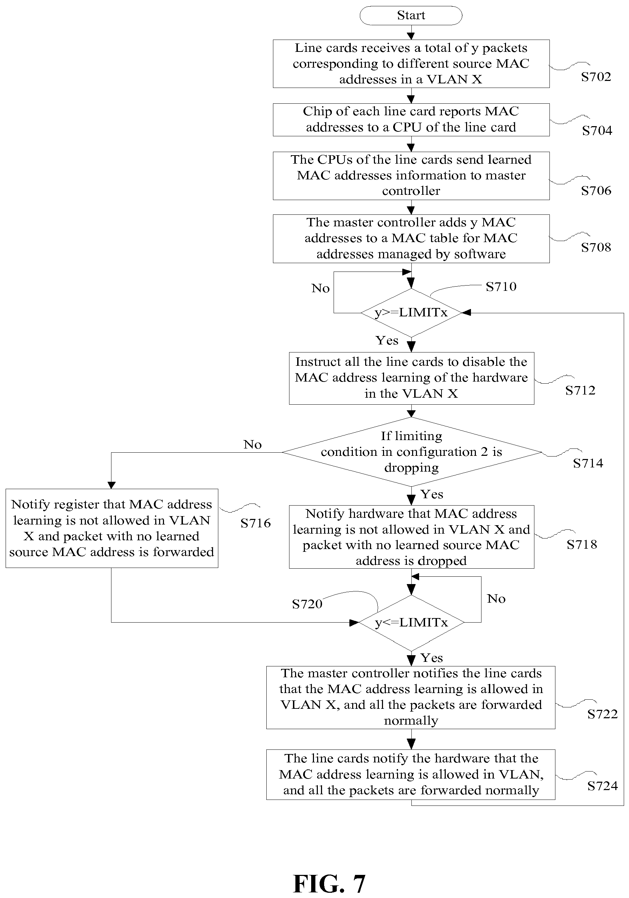

FIG. 7 is a flowchart of a method for learning a MAC address in a virtual local area network of a switch according to a preferred embodiment of the present invention. This preferred embodiment corresponds to the above user configuration mode. As illustrated in FIG. 7, the method includes the steps described below.

In step S702, all line cards in a chassis switch receive a total of y packets corresponding to different source MAC addresses in a virtual local area network X, where y ≥ LIMITx.

In step S704, a chip of each line card reports a learned MAC address to a CPU of the line card.

In step S706, the CPU of each line card reports, through inter-board communication, the learned MAC address information (including MAC address + VLAN + port number) to a master controller of the chassis switch.

In step S708, the master controller of the chassis switch adds the received MAC address information to a MAC table for MAC addresses managed by software. The table records information of all the learned MAC address information (including MAC address + VLAN + port number).

In step S710, it is determined whether a number (i.e., y) of MAC addresses, which are managed by software monitoring the master controller of the chassis switch, in the virtual local area network X reaches LIMITx. If LIMITx is reached, the method goes to the step S712. If LIMITx is not reached, the method goes to the step S710.

In step S712, all the line cards in the chassis switch are instructed to disable the MAC address learning in the virtual local area network.

In step S714, it is determined whether a limiting strategy in the configuration 2 is "forwarding" or "dropping" (which is determined by configuration 2). If the limiting strategy is configured as "forwarding", the method goes to the step S716. If the limiting strategy is configured as "dropping", the method goes to the step S718.

In step S716, all the line cards notify a register that MAC address learning is not allowed in the virtual local area network X and a packet whose source MAC address corresponds to a learned source MAC address is directly forwarded. In this case, only in the virtual local area network X, MAC address learning is limited and packets corresponding to learned MAC addresses can be forwarded normally; and in other virtual local area networks, MAC address learning can continue normally and packets can also be forwarded normally.

In step S718, all the line cards notify hardware (driver) that MAC address learning is not allowed in the virtual local area network X and a packet whose source MAC address corresponds to a learned source MAC address is dropped. In this case, only in the virtual local area network X, MAC address learning is limited and packets corresponding to learned MAC addresses can be forwarded normally; and in other virtual local area networks, MAC address learning can continue normally and packets can also be forwarded normally.

In step S720, after the number (i.e., y) of the MAC addresses, which are managed by software monitoring the master controller of the chassis switch, in the virtual local area network X reaches LIMITx of the configuration 1, it is determined whether the number of the MAC addresses in the virtual local area network X is less than LIMITx for a certain reason (such as aging and manual removal of MAC address).If yes, the method goes to the step S722. If no, the monitoring continues and the method goes to the step S720.

In step S722, the master controller of the chassis switch sends, to all the line cards, a message indicating releasing the limit of the number of the MAC addresses in the virtual local area network X. All packets can be forwarded normally. In this case, in other virtual local area networks, MAC address learning can continue normally and all packets can also be forwarded normally.

In step S724, after receiving the message sent by the master controller, all the line cards notify hardware (driver) that MAC address learning is allowed in the virtual local area network X. All packets can be forwarded normally. Then the method goes to the step S710.

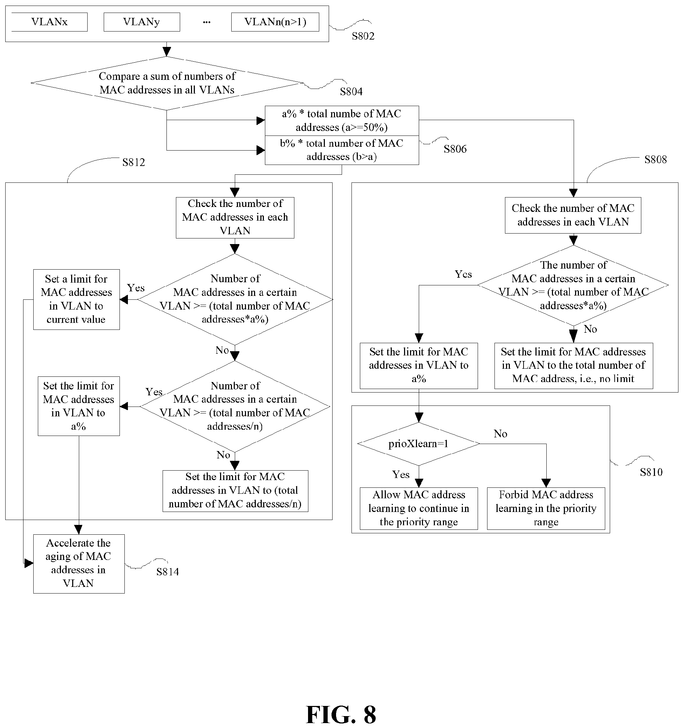

FIG. 8 is a flowchart of a method for learning a MAC address in a virtual local area network of a switch according to a preferred embodiment of the present invention. This preferred embodiment corresponds to the above dynamic limit configuration mode. As illustrated in FIG. 8, the method includes the steps described below.

In step S802, n (n > 1) virtual local area networks are configured for a switch.

In step S804, a CPU of the switch monitors in real time whether a sum of quantities of MAC addresses learned in all current virtual local area networks reaches a certain dynamic watershed (assuming that a ≥ 50%).

In step S806, when the sum of quantities of the MAC addresses learned in all the virtual local area networks reaches a dynamic watershed (a total number of MAC addresses x a%), the method goes to the step S808. When the sum of quantities of the MAC addresses learned in all the virtual local area networks reaches a dynamic watershed (the total number of the MAC addresses x b%), where b>a, the method goes to the step S812.

In step S808, a number of MAC addresses in each virtual local area network is checked, and different limiting values are set for different virtual local area networks. For example, if a number in a certain virtual local area network is greater than or equal to a quotient of the total number of the MAC addresses and n (the total number of the MAC addresses/n), a limiting value of the number in this virtual local area network is set to a product of the total number of the MAC addresses and a% (the total number of the MAC addresses x a%). For example, if a number in a certain virtual local area network is less than a quotient of the total number of the MAC addresses and n (the total number of the MAC addresses/n), a limiting value of the number in this virtual local area network is set to the total number of the MAC addresses. That is, MAC learning is not limited in this virtual local area network.

In step S810, it is determined whether MAC learning is allowed to continue in the priority range of the configuration 4. If MAC learning is allowed, hardware is configured to allow MAC learning to continue in the priority range of the configuration 4. If MAC learning is forbidden, hardware is configured to disable MAC learning in the priority range of the configuration 4.

In step S812, the number of the MAC addresses in each virtual local area network is checked, and different limiting values are set for different virtual local area networks. If a number in a certain virtual local area network is greater than or equal to a product of the total number of the MAC addresses and a% (the total number of the MAC addresses x a%), a limiting value of the number of MAC addresses in this virtual local area network is set to the number of MAC addresses learned in this virtual local area network. Then the method goes to the step S814. If a number of MAC addresses in a certain virtual local area network is less than the product of the total number of the MAC addresses and a% (the total number of the MAC addresses x a%), it is determined whether the number of MAC addresses in this virtual local area network is greater than or equal to a quotient of the total number of the MAC addresses and n (the total number of the MAC addresses/n). If the number of the MAC addresses in this virtual local area network is greater than or equal to the quotient of the total number of the MAC addresses and n (the total number of the MAC addresses/n), the limiting value of the number of the MAC addresses in this virtual local area network is set to the product of the total number of the MAC addresses and a% (the total number of the MAC addresses x a%). Then the method goes to the step S814. If the number of the MAC addresses in this virtual local area network is less than the quotient of the total number of the MAC addresses and n (the total number of the MAC addresses/n), the limiting value of the number of the MAC addresses in this virtual local area network is set to the quotient of the total number of the MAC addresses and n (the total number of the MAC addresses/n).

In step S814, for a virtual local network that occupies a large number of MAC addresses, a method of accelerating an aging rate is adopted, and MAC addresses that are not updated or used for a long time period are removed.

In addition, embodiments of the present invention further provide a computer-readable storage medium configured to store computer-executable instructions for executing the above-mentioned methods when executed by a processor.

It will be understood by those of ordinary skill in the art that all or part of the steps in the methods described above may be implemented by related hardware (e.g., a processor) instructed by one or more programs, and these programs may be stored in a computer-readable storage medium such as a ROM, a magnetic disk, an optical disk or the like. Optionally, all or part of the steps in the embodiments described above may also be implemented using one or more integrated circuits. Accordingly, the modules/units in the embodiments described above may be implemented by hardware. For example, the functions of these modules/units may be implemented by one or more integrated circuits. Alternatively, these modules/units may be implemented by software function modules. For example, the functions of these modules/units may be implemented by using a processor to execute program instructions stored in a storage medium. The present application is not limited to any specific combination of hardware and software.

The present application may have other various embodiments. Various modifications and variants may be made by those skilled in the art according to the present application without departing from the spirit and essence of the present application. However, these corresponding modifications and variants fall within the scope of the claims in the present application.

### INDUSTRIAL APPLICABILITY

The solution provided by embodiments of the present invention includes: determining whether a number of MAC addresses learned in a virtual local area network reaches a limiting condition, where the limiting condition includes one of the following: a preset threshold and a preset dynamic watershed; and when it is determined that the number of the MAC addresses learned in the virtual local area network reaches the limiting condition, stopping learning a MAC address that is received after the limiting condition is reached, and processing, in a preset manner, a packet corresponding to the MAC address that is received after the limiting condition is reached, where the preset manner includes one of the following: forwarding and dropping. This solution solves a problem of failing to control learning of a MAC address in a virtual local area network of a switch in the related art, and thereby achieves an effect of improving operation stability of the virtual local area network.

## Claims

1. A method for learning a MAC address in a virtual local area network of a switch, comprising:
determining whether a number of MAC addresses learned in a virtual local area network reaches a limiting condition, wherein the limiting condition comprises one of the following: a preset threshold and a preset dynamic watershed; and
when it is determined that the number of the MAC addresses learned in the virtual local area network reaches the limiting condition, stopping learning a MAC address that is received after the limiting condition is reached, and processing, in a preset manner, a packet corresponding to the MAC address that is received after the limiting condition is reached, wherein the preset manner comprises one of the following: forwarding and dropping.

2. The method of claim 1, wherein
when the limiting condition is the preset dynamic watershed, the determining whether the number of the MAC addresses learned in the virtual local area network reaches the limiting condition comprises:
calculating a sum of numbers of MAC addresses learned in all virtual local area networks of a switch to obtain a first total number of MAC addresses; and
determining whether the first total number of MAC addresses reaches the first preset dynamic watershed, wherein the first preset dynamic watershed is a product of a second total number of MAC addresses and a first preset dynamic watershed percentage, and the second total number of MAC addresses is a sum of numbers of MAC addresses in all the virtual local area networks,
wherein when it is determined that the first total number of MAC addresses reaches the first preset dynamic watershed, it is determined that the number of the MAC addresses learned in the virtual local area network reaches the limiting condition.

3. The method of claim 2, wherein
the determining whether the number of the MAC addresses learned in the virtual local area network reaches the limiting condition further comprises:
when it is determined that the first total number of MAC addresses does not reach the first preset dynamic watershed, determining whether the first total number of MAC addresses reaches a second preset dynamic watershed, wherein the second preset dynamic watershed is a product of the second total number of MAC addresses and a second preset dynamic watershed percentage, and the second preset dynamic watershed is less than the first preset dynamic watershed,
wherein when it is determined that the first total number of MAC addresses reaches the second preset dynamic watershed, it is determined that the number of the MAC addresses learned in the virtual local area network reaches the limiting condition.

4. The method of claim 2, wherein
when it is determined that the first total number of MAC addresses reaches the first preset dynamic watershed, the method further comprises:
obtaining a number of MAC addresses in each of all the virtual local area networks;
determining whether a number of MAC addresses in a first target virtual local area network among all the virtual local area networks is greater than or equal to the first preset dynamic watershed;
when it is determined that the number of the MAC addresses in the first target virtual local area network among all the virtual local area networks is greater than or equal to the first preset dynamic watershed, setting a limiting value of the number of the MAC addresses in the first target virtual local area network to a number of MAC addresses learned in the first target virtual local area network, and removing a MAC address that is learned in the first target virtual local area network but not used within a preset time period;
when it is determined that the number of the MAC addresses in the first target virtual local area network among all the virtual local area networks is less than the first preset dynamic watershed, determining whether the number of the MAC addresses in the first target virtual local area network is greater than or equal to an average number of MAC addresses, wherein the average number of MAC addresses is a quotient of the second total number of MAC addresses and a number of all the virtual local area networks;
when it is determined that the number of the MAC addresses in the first target virtual local area network is greater than or equal to the average number of MAC addresses, setting the limiting value of the number of the MAC addresses in the first target virtual local area network to a second preset dynamic watershed, and removing the MAC address that is learned in the first target virtual local area network but not used within the preset time period, wherein the second preset dynamic watershed is a product of the second total number of MAC addresses and a second preset dynamic watershed percentage, and the second preset dynamic watershed is less than the first preset dynamic watershed; and
when it is determined that the number of the MAC addresses in the first target virtual local area network is less than the average number of MAC addresses, setting the limiting value of the number of the MAC addresses in the first target virtual local area network to the average number of MAC addresses.

5. The method of claim 3, wherein
when it is determined that the first total number of MAC addresses reaches the second preset dynamic watershed, the method further comprises:
obtaining a number of MAC addresses in each of all the virtual local area networks;
determining whether a number of MAC addresses in a second target virtual local area network among all the virtual local area networks is greater than or equal to an average number of MAC addresses, wherein the average number of MAC addresses is a quotient of the second total number of MAC addresses and a number of all the virtual local area networks;
when it is determined that the number of the MAC addresses in the second target virtual local area network is greater than or equal to the average number of MAC addresses, setting a limiting value of the number of the MAC addresses in the second target virtual local area network to the first preset dynamic watershed; and
when it is determined that the number of the MAC addresses in the second target virtual local area network is less than the average number of MAC addresses, setting the limiting value of the number of the MAC addresses in the second target virtual local area network to the second total number of MAC addresses.

6. The method of claim 5, wherein
after the setting the limiting value of the number of the MAC addresses in the second target virtual local area network to the first preset dynamic watershed, the method further comprises:
determining a priority range for the second target virtual local area network, wherein the priority range is used for indicating whether to continue learning a MAC address in the second target virtual local area network.

7. An apparatus for learning a MAC address in a virtual local area network of a switch, comprising:
a first determination module, which is configured to determine whether a number of MAC addresses learned in a virtual local area network reaches a limiting condition, wherein the limiting condition comprises one of the following: a preset threshold and a preset dynamic watershed; and
a processing module, which is configured to, when it is determined that the number of the MAC addresses learned in the virtual local area network reaches the limiting condition, stop learning a MAC address that is received after the limiting condition is reached, and process, in a preset manner, a packet corresponding to the MAC address that is received after the limiting condition is reached, wherein the preset manner comprises one of the following: forwarding and dropping.

8. The apparatus of claim 7, wherein
when the limiting condition is the preset dynamic watershed, the first determination module comprises:
a counting unit, which is configured to calculate a sum of numbers of MAC addresses learned in all virtual local area networks of a switch to obtain a first total number of MAC addresses; and
a first determination unit, which is configured to determine whether the first total number of MAC addresses reaches the first preset dynamic watershed, wherein the first preset dynamic watershed is a product of a second total number of MAC addresses and a first preset dynamic watershed percentage, and the second total number of MAC addresses is a sum of numbers of MAC addresses in all the virtual local area networks,
wherein when it is determined that the first total number of MAC addresses reaches the first preset dynamic watershed, it is determined that the number of the MAC addresses learned in the virtual local area network reaches the limiting condition.

9. The apparatus of claim 8, wherein
the first determination module further comprises:
a second determination unit, which is configured to, when it is determined that the first total number of MAC addresses does not reach the first preset dynamic watershed, determine whether the first total number of MAC addresses reaches a second preset dynamic watershed, wherein the second preset dynamic watershed is a product of the second total number of MAC addresses and a second preset dynamic watershed percentage, and the second preset dynamic watershed is less than the first preset dynamic watershed,
wherein when it is determined that the first total number of MAC addresses reaches the second preset dynamic watershed, it is determined that the number of the MAC addresses learned in the virtual local area network reaches the limiting condition.

10. The apparatus of claim 8, further comprising:
a first obtaining module, which is configured to, when it is determined that the first total number of MAC addresses reaches the first preset dynamic watershed, obtain a number of MAC addresses in each of all the virtual local area networks;
a second determination module, which is configured to determine whether a number of MAC addresses in a first target virtual local area network among all the virtual local area networks is greater than or equal to the first preset dynamic watershed;
a first setting module, which is configured to, when it is determined that the number of the MAC addresses in the first target virtual local area network among all the virtual local area networks is greater than or equal to the first preset dynamic watershed, set a limiting value of the number of the MAC addresses in the first target virtual local area network to a number of MAC addresses learned in the first target virtual local area network, and remove a MAC address that is learned in the first target virtual local area network but not used within a preset time period;
a third determination module, which is configured to, when it is determined that the number of the MAC addresses in the first target virtual local area network among all the virtual local area networks is less than the first preset dynamic watershed, determine whether the number of the MAC addresses in the first target virtual local area network is greater than or equal to an average MAC address, wherein the average number of MAC addresses is a quotient of the second total number of MAC addresses and a number of all the virtual local area networks;
a second setting module, which is configured to, when it is determined that the number of the MAC addresses in the first target virtual local area network is greater than or equal to the average number of MAC addresses, set the limiting value of the number of the MAC addresses in the first target virtual local area network to a second preset dynamic watershed, and remove the MAC address that is learned in the first target virtual local area network but not used within the preset time period, wherein the second preset dynamic watershed is a product of the second total number of MAC addresses and a second preset dynamic watershed percentage, and the second preset dynamic watershed is less than the first preset dynamic watershed; and
a third setting module, which is configured to, when it is determined that the number of the MAC addresses in the first target virtual local area network is less than the average number of MAC addresses, set the limiting value of the number of the MAC addresses in the first target virtual local area network to the average number of MAC addresses.

11. The apparatus of claim 9, further comprising:
a second obtaining module, which is configured to, when it is determined that the first total number of MAC address reaches the second preset dynamic watershed, obtain a number of MAC addresses in each of all the virtual local area networks;
a fourth determination module, which is configured to determine whether a number of MAC addresses in a second target virtual local area network among all the virtual local area networks is greater than or equal to an average number of MAC addresses, wherein the average number of MAC addresses is a quotient of the second total number of MAC addresses and a number of all the virtual local area networks;
a fourth setting module, which is configured to, when it is determined that the number of the MAC addresses in the second target virtual local area network is greater than or equal to the average number of MAC addresses, set a limiting value of the number of the MAC addresses in the second target virtual local area network to the first preset dynamic watershed; and
a fifth setting module, which is configured to, when it is determined that the number of the MAC addresses in the second target virtual local area network is less than the average number of MAC addresses, set the limiting value of the number of the MAC addresses in the second target virtual local area network to the second total number of MAC addresses.

12. The apparatus of claim 11, further comprising:
a determination module, which is configured to, after the limiting value of the number of the MAC addresses in the second target virtual local area network is set to the first preset dynamic watershed, determine a priority range for the second target virtual local area network, wherein the priority range is used for indicating whether to continue learning a MAC address in the second target virtual local area network.
